# EUROPEAN PATENT SPECIFICATION

(11) **EP 0 714 832 B1**
(45) Date of publication and mention of the grant of the patent: **12.05.1999**
(21) Application number: 95118777.2
(22) Date of filing: 29.11.1995
(51) Int. Cl.: B65D 1/02

(54) **Mineral water bottle without off-taste**
Mineralwasser-Flasche ohne Nachgeschmack
Bouteille d'eau minérale sans arrière-goût

(30) Priority: 29.11.1994 DE 4442699
(43) Date of publication of application: 05.06.1996
(73) Proprietor: Schmalbach-Lubeca AG, 40880 Ratingen (DE)
(72) Inventor: Tevlin, John, F-59470 Wormhout (FR); Linnenbaum, Franz J., D-38159 Vechelde (DE)
(74) Representative: Leonhard, Frank Reimund, Dipl.-Ing.

(56) References cited:
- CH-A- 684 537
- DE-A- 3 241 571
- DE-A- 4 223 197
- US-A- 5 006 613
- DATABASE WPI Section Ch, Week 9313 Derwent Publications Ltd., London, GB; Class A23, AN 93-104445 & JP-A-05 043 782 ( KURARAY CO LTD) , 23 February 1993
- DATABASE WPI Section Ch, Week 9036 Derwent Publications Ltd., London, GB; Class A92, AN 90-271561 & JP-A-02 191 626 ( TEIJIN KK) , 27 July 1990

## Description

The present invention relates to the technical field of refillable PET bottles. Refillable PET bottles are more and more developing into a real alternative to glass bottles; however they still have their limitations. One such limitation is the temperature at which the containers can be washed without starting to shrink. Another limitation is the so-called "flavour carry-over" which implies not to use bottles which contained a specifically flavoured beverage again for a substantially differently flavoured or non-flavoured beverage. When the empty bottles are returned it is impossible to say what they contained before. For this reason, certain beverages must always be filled in new PET bottles if the fillers do not want to use sniffers, recognizing residue beverage smells in the returned bottles, to group certain bottles used for a certain beverage to the filling station for the same beverage - as recognized by the smell detecting and grouping sniffers.

A thermoplastic polymer with a component to neutralize Acetaldehyd (AA) in normal bottles - which are no "refillable" bottles which need the copability of "hot washable" - are disclosed in **CH-B 684 537** (D. Ganz); said polymer with AA-binding (neutralizing) component is designed to give "normally" solid material under "Normalbedingungen" (see col. 2, lines 15 to 20 of said document). Improved flavor retaining property in combination with reducing AA-concentration is subject matter of **WO 93/20147** (Eastman Kodak), but also with no hot-washable bottles. **US-A 5,006,613** (Eastman Kodak) concerns clear containers (with less than 10% haze) for "hot fill" containers without AA-neutralization; a "hot fill" bottle however has a completely different design than a "hot washable" bottle. A mineral water bottle with low AA-content is subject matter of **JP-A 05/043,782** (Kuraray) as reported in Derwent's abstract AN 93-104445 of February 1993; this bottle has high transparency and less deterioration of taste due to AA-content. The same matter finds its public availability in **JP-A 02/191,626** (Teijin), as reported in Derwent's abstract AN 90-271561 of July 1990.

If a refillable bottle is to be filled with spring water (a mineral water of spring water quality) it must not have been used for a flavoured drink such as fruit juice. The walls of PET bottles for mineral water may also not contain noticeable quantities of (free) acetaldehyde, as (free) acetaldehyde (AA) from the wall migrates into the mineral water, thus deteriorating the taste of the mineral water. AA, however, is contained in any PET-container or bottle which claims to be hot-washable, as being standard effect of the manufacturing process.

PET bottles for mineral water therefore may not give rise to flavour carry-over, and their walls must not contain free acetaldehyde which might migrate into the spring water. It is therefore **an object of the invention** to reconcile these conflicting interests and suggest a refillable bottle and a process of manufacturing the bottle, which can be used for mineral water and is veritably refillable, i.e. which can be refilled irrespective of what it contained before. The invention to solve this problem is outlined in claims 1 to 4 and 8 or 9.

The invention is based on the fact that a specific process has been used to manufacture the container to describe the container's physical properties. The resulting bottles are hot-washable at elevated temperatures of about 75°C to 85°C. For physical reasons, existing processes use a PET which normally results in a (relatively) high concentration of acetaldehyde (in short terms: AA) after injection moulding and blowing of the preform. It is exactly this (relatively) high AA-content which makes it impossible to use these bottles for mineral (spring) water. However, if the PET contains an additive which binds the AA contained in the wall, migration of AA into the mineral water can be avoided, and due to the manufacturing process, the bottles are hot-washable to avert carry-over by washing the bottles without the need for costly coatings. As a result of the hot washing process any flavours clinging to the wall - in which the AA is contained in bound state - are desorbed to such an extent that mineral water which is subsequently filled into the bottle is not affected.

Surprisingly, the hot-washing process removes any flavours clinging to PET bottles with the AA remaining bound by the additive and as the AA is bound, it does not affect the mineral water either, even if the bottles are stored over extended periods of time. The limitations associated with bound acetaldehyde in manufacturing the hot-washable containers are much smaller than believed in the art. The inventive concept thus achieves hot-washable (refillable) bottles for spring water, by virtue of four alternatives of obtaining hot washable containers of claims 1 to 4, linked with each other by said general inventive concept.

Four different methods of manufacturing hot-washable containers to define the physical structure of the containers are suggested (claims 1 to 4). A process of obtaining the container of claim 1 is outlined in claim 8. A process of obtaining the containers of claim 2 is outlined in claim 9.

It is believed that walls containing bound AA allow flavors, clinging on their surface, to fully (or almost fully) be removed by the allowed temperature range for the cleaning or washing liquid. Fully or almost fully removal of residual flavours would not have been achieved by hot washing only.

A low concentration of additive, whose function is to bind the acetaldehyde contained in the wall, is sufficient (Claim 7).

Claim 5 depicts preferred thermostable materials which could be used for a container according to claim 4.

All containers may be bottles (claim 6).

The AA binding substance may be or comprise a polyamide, for example a low molecular weight partially aromatic polyamide (e.g. poly(m-xylylene hexanedioic amide) or poly(hexamethylene isophthalamide)) or a low molecular weight aliphatic polyamide (e.g. poly(hexamethylene hexanedioic amide) or poly(ε-caprolactame)), or a mixture thereof.

**Examples** as embodiments can be given without requiring drawings.

A container is made from a preform. A preform already has a thread finish at the upper end as well as a body and a bottom area, which are turned into the body and the bottom of the bottle respectively when the preform is blown under high pressure into a mould (blow moulding).

Preforms are substantially made of PET. In multi-layer processes, specific materials are injected into a mould simultaneously or one after the other (sequentially) to get a multi-layer preform. The actual container can be made in a two-step blowing/shrinking process, which first turns the preform into an over-sized intermediate container, then shrinks said container so that it is under-sized and finally blow-moulds the shrunk intermediate product to its final size. Instead of employing the above blowing/shrinking process it is also possible to use thermostable middle layers in the preforms; a polycarbonate middle layer between outer PET layers is especially suited.

Surprisingly, the hot-washing process removes any flavours clinging to PET bottles with the acetaldehyde remaining bound by the additive. Apart from washing out any flavours, the washing also cleans the container, so that it can be used for mineral waters without the risk of flavour carry-over. As the acetaldehyde is bound, it does not affect the mineral water either, even if the bottles are stored over extended periods of time. The limitations associated with bound acetaldehyde in the manufacture of hot-washable containers are much smaller than they were generally believed to be in the art.

It is possible to fill this bottle, which was described by way of example, with flavoured drinks and refill it with natural spring mineral water without the risk of any off-flavours or off-taste being produced in either the flavoured drink or the mineral water.

The present invention relates to the technical field of refillable PET bottles. It is an object of the present invention to provide a refillable bottle which can be used for mineral water and is a veritable refillable bottle, i.e. which can be filled with mineral water independent of what beverage it contained before. This is achieved by means of an additive in the container wall which binds the acetaldehyde contained in the PET and by using a bottle forming process which allows the production of containers (from a preform) which can be washed at a higher temperature without noticeably shrinking.

## Claims

1. **Container** consisting substantially of PET, being suitable for mineral water, by
(a) comprising an additive in the wall of the container which holds back or binds the acetaldehyde (AA) contained in the PET;
characterized in that
(b) the container being manufactured from a preform in a production process that allows the container to be washed without noticeable shrinkage at an elevated temperature in the range of 75°C to 85°C, said production process comprising a two step blowing/shrinking that enlarges the preform in the first step to an intermediate container being of larger size than the final container, a shrinkage based on heat influence and a blow-moulding of the shrunk container to its final size.

2. **Container** consisting substantially of PET, being suitable for mineral water, by
(a) comprising an additive in the wall of the container which holds back or binds the acetaldehyde (AA) contained in the PET;
characterized in that
(b) the container being manufactured from a preform in a production process that allows the container to be washed without noticeable shrinkage at an elevated temperature in the range of 75°C to 85°C, said production process comprising a heat-setting in which the wall of the container becomes heat-stable when being in a heated or hot mold under maintained pressure for an extended period of time.

3. **Container** consisting substantially of PET, being suitable for mineral water, by
(a) comprising an additive in the wall of the container which holds back or binds the acetaldehyde (AA) contained in the PET;
characterized in that
(b) the container being manufactured from a preform in a production process that allows the container to be washed without noticeable shrinkage at an elevated temperature in the range of 75°C to 85°C, said production process comprising an adding of a small amount of PEN to said PET, making the container capable for washing at the elevated temperature without noticeably changing its size.

4. **Container** consisting substantially of PET, being suitable for mineral water, by
(a) comprising an additive in the wall of the container which holds back or binds the acetaldehyde (AA) contained in the PET;
characterized in that
(b) the container being manufactured from a preform in a production process that allows the container to be washed without noticeable shrinkage at an elevated temperature in the range of 75°C to 85°C, said production process comprising the introducing of a middle layer, neighbored by PET-layers, the middle layer being a heat-stable material as a stabilizing layer.

5. Container according to claim 4, comprising polycarbonate or polyethylene naphthalate (PEN) as heat-stable material.

6. Container according to one of claims 1 to 4, being a refillable bottle.

7. Container according to one of claims 1 to 4, comprising the additive in a concentration of 1% to 5%, preferably more than or equal 2%.

8. **Method for manufacturing** a container according to claim 1, said method comprising the steps of
(a) injection moulding a preform of substantially PET with an additive in the container wall forming portion of the preform, which additive holds back or binds the acetaldehyde (AA) contained in the PET;
(b) introducing the preform in a mould;
(c) blow moulding the container in a two step blowing/shrinking process, by
- enlarging the preform in the first step to an intermediate container being of larger size than the final container,
- shrinking the intermediate container based on heat influence,
- and blow-moulding the shrunk container to its final size, thus allowing the container to be washed without noticeable shrinkage at an elevated temperature.

9. **Method for manufacturing** a container according to claim 2, said method comprising the steps of
(a) injection moulding a preform of substantially PET with an additive in the container wall forming portion of the preform, which additive holds back or binds the acetaldehyde (AA) contained in the PET;
(b) introducing the injection moulded preform in a mould and heating the mould;
(c) blow moulding the container in a heat set process, by
- blow-moulding the preform under maintained pressure to a final container size in the hot mould;
- keeping the wall of the blown container for an extended period of time in contact with the inner surface of the hot mould, thus becoming heat-stable and allowing the final container to be washed without noticeable shrinkage at an elevated temperature.

## Patentansprüche

1. **Behälter**, im wesentlichen bestehend aus PET, geeignet für Mineralwasser, durch
(a) Enthalten eines Additivs in der Wand des Containers, das im PET enthaltenes Acetaldehyd (AA) zurückhält oder bindet,
dadurch gekennzeichnet, daß
(b) der Container in einem Herstellungsprozeß aus einer Preform hergestellt wurde, so daß der Container ohne wesentliche oder spürbare Schrumpfung bei erhöhter Temperatur in einem Bereich von 75°C bis 85°C waschbar ist, wobei der Herstellungsprozeß ein zweistufiger Blas/Schrumpfprozeß ist, in dem die Preform in der ersten Stufe auf einen Zwischenbehälter mit größerer Größe als der Endbehälter aufgeblasen wird, das Schrumpfen auf Wärmeeinfluß beruht und ein Blasformprozeß des geschrumpften Containers zum Erhalt seiner endgültigen Größe vorgesehen ist.

2. **Behälter**, im wesentlichen bestehend aus PET, geeignet für Mineralwasser, durch
(a) Enthalten eines Additivs in der Wand des Containers, das im PET enthaltenes Acetaldehyd (AA) zurückhält oder bindet,
dadurch gekennzeichnet, daß
(b) der Container aus einer Preform in einem Herstellungsprozeß hergestellt wurde, die es erlaubt, daß der Container ohne wesentliches oder spürbares Schrumpfen bei einer erhöhten Temperatur im Bereich von 75°C bis 85°C waschbar ist, welcher Herstellungsprozeß ein "heat-setting" umfaßt, bei welchem die Wand des Containers wärmestabil oder hitzestabil wird, wenn sie in einer erwärmten oder heißen Form oder Blasform unter aufrechterhaltenem Druck für eine erweiterte Zeitspanne verbleibt.

3. **Behälter**, im wesentlichen bestehend aus PET, geeignet für Mineralwasser, durch
(a) Enthalten eines Additivs in der Wand des Containers, das im PET enthaltenes Acetaldehyd (AA) zurückhält oder bindet,
dadurch gekennzeichnet, daß
(b) der Container in einem Herstellungsprozeß aus einer Preform hergestellt wurde, so daß der Container ohne wesentliche oder spürbare Schrumpfung bei erhöhter Temperatur in einem Bereich von 75°C bis 85°C waschbar ist, wobei der Herstellungsprozeß eine Hinzufügung einer kleinen Menge von PEN zu dem PET beinhaltet, wodurch der Container bei erhöhter Temperatur waschbar wird, ohne daß er seine Größe wesentlich oder spürbar ändert.

4. **Behälter**, im wesentlichen bestehend aus PET, geeignet für Mineralwasser, durch
(a) Enthalten eines Additivs in der Wand des Containers, das im PET enthaltenes Acetaldehyd (AA) zurückhält oder bindet,
dadurch gekennzeichnet, daß
(b) der Container in einem Herstellungsprozeß aus einer Preform hergestellt wurde, so daß der Container ohne wesentliche oder spürbare Schrumpfung bei erhöhter Temperatur in einem Bereich von 75°C bis 85°C waschbar ist, wobei der Herstellungsprozeß das Einfügen einer Mittellage oder inneren Schicht beinhaltet, die von PET-Lagen benachbart ist, wobei die Mittellage ein hitzestabiles oder wärmestabiles Material als Stabilisierungslage darstellt.

5. Behälter nach Anspruch 4, umfassend Polycarbonat oder Polyethylennaphthalat (PEN) als hitzestabiles Material

6. Container nach einem der Ansprüche 1 bis 4, als wiederbefüllbare Flasche.

7. Container nach einem der Ansprüche 1 bis 4, enthaltend ein Additiv in einer Konzentration von 1% bis 5%, bevorzugt mehr oder gleich 2%.

8. **Herstellungsprozeß** für einen Container nach Anspruch 1, welches Herstellverfahren die folgenden Schritte umfaßt
(a) Spritzformen oder -gießen einer Preform aus im wesentlichen PET mit einem Additiv in dem die Containerwand bildenden Bereich der Preform, welches Additiv das in dem PET enthaltene Acetaldehyd (AA) zurückhält oder bindet;
(b) Einbringen der Preform in eine Form oder Blasform;
(c) Blasformen des Containers in einem zweistufigen Blasformungs/Schrumpfungsprozeß, durch
- Vergrößern der Preform in einem ersten Schritt auf einen Zwischenbehälter, dessen Größe größer ist, als diejenige des fertigen Containers,
- Schrumpfen des Zwischenbehälters durch Wärmeeinfluß,
- Blasformen des geschrumpften Containers auf seine endgültige Größe, wodurch der Container ohne spürbares Schrumpfen bei erhöhter Temperatur waschbar ist oder wird.

9. **Herstellungsprozeß** für einen Container nach Anspruch 2, welches Herstellverfahren die folgenden Schritte umfaßt
(a) Spritzformen oder -gießen einer Preform aus im wesentlichen PET mit einem Additiv in dem die Containerwand bildenden Bereich der Preform, welches Additiv das in dem PET enthaltene Acetaldehyd (AA) zurückhält oder bindet;
(b) Einbringen der spritzgußgeformten Preform in eine Form oder Blasform und Erwärmen der Form bzw. Blasform;
(c) Blasformen des Behälters in einem Heat-set-Prozeß, durch
- Blasformen der Preform unter aufrechterhaltenem Druck in die fertige Containergröße in der erwärmten Form oder Blasform,
- Halten der Wand des geblasenen Containers für eine erweiterte Zeitspanne in Berührung mit der inneren Oberfläche der warmen Form bzw. Blasform, wodurch die Wand wärmestabil wird und es dem fertigen Container ermöglicht, ohne spürbares Schrumpfen bei erhöhter Temperatur gewaschen werden zu können.

## Revendications

1. Récipient consistant principalement en PET, étant approprié pour de l'eau minérale, parce que
(a) comprenant un additif dans la paroi du récipient qui retient ou fixe l'aldéhyde acétique (AA) contenu dans le PET ;
caractérisé en ce que
(b) le récipient est fabriqué à partir d'une préforme dans un procédé de fabrication qui permet au récipient d'être lavé sans rétrécissement notable à une température élevée dans la plage de 75°C à 85°C, ledit procédé de fabrication comprenant une opération en deux phases de soufflage/rétrécissement qui agrandit la préforme dans la première phase jusqu'à obtention d'un récipient intermédiaire ayant une plus grande dimension que le récipient final, un rétrécissement basé sur l'action de la chaleur et une extrusion-soufflage du récipient rétréci jusqu'à sa dimension finale.

2. Récipient consistant principalement en PET, étant approprié pour de l'eau minérale, parce que
(a) comprenant un additif dans la paroi du récipient qui retient ou fixe l'aldéhyde acétique (AA) contenu dans le PET ;
caractérisé en ce que
(b) le récipient est fabriqué à partir d'une préforme dans un procédé de fabrication qui permet au récipient d'être lavé sans rétrécissement notable à une température élevée dans la plage de 75°C à 85°C, ledit procédé de fabrication comprenant un thermofixage dans lequel la paroi du récipient devient stable à la chaleur lorsqu'il se trouve dans un moule chauffé ou chaud sous une pression maintenue pendant une durée prolongée.

3. Récipient consistant principalement en PET, étant approprié pour de l'eau minérale, parce que
(a) comprenant un additif dans la paroi du récipient qui retient ou fixe l'aldéhyde acétique (AA) contenu dans le PET ;
caractérisé en ce que
(b) le récipient est fabriqué à partir d'une préforme dans un procédé de fabrication qui permet au récipient d'être lavé sans rétrécissement notable à une température élevée dans la plage de 75°C à 85°C, ledit procédé de fabrication comprenant une addition d'une petite quantité de PEN au PET, ce qui permet au récipient d'être lavé à la température élevée sans changement notable de dimension.

4. Récipient consistant principalement en PET, étant approprié pour de l'eau minérale, parce que
(a) comprenant un additif dans la paroi du récipient qui retient ou fixe l'aldéhyde acétique (AA) contenu dans le PET ;
caractérisé en ce que
(b) le récipient est fabriqué à partir d'une préforme dans un procédé de fabrication qui permet au récipient d'être lavé sans rétrécissement notable à une température élevée dans la plage de 75°C à 85°C, ledit procédé de fabrication comprenant l'introduction d'une couche centrale, prise en sandwich par des couches de PET, la couche centrale étant un matériau stable à la chaleur en tant que couche stabilisante.

5. Récipient selon la revendication 4, comprenant du polycarbonate ou du polyéthylène-naphtalate (PEN) en tant que matériau stable à la chaleur.

6. Récipient selon l'une des revendications 1 à 4, étant une bouteille pouvant être de nouveau remplie.

7. Récipient selon l'une des revendications 1 à 4, comprenant l'additif à une concentration de 1 % à 5 %, de préférence supérieure ou égale à 2 %.

8. Procédé pour fabriquer un récipient selon la revendication 1, ledit procédé comprenant les opérations consistant en :
(a) un moulage par injection d'une préforme consistant principalement en PET avec un additif dans la partie de formation de paroi de récipient de la préforme, lequel additif retient ou fixe l'aldéhyde acétique (AA) contenu dans le PET ;
(b) une introduction de la préforme dans un moule ;
(c) une extrusion-soufflage du récipient en une opération en deux phases de soufflage/rétrécissement, par
- agrandissement de la préforme dans la première phase jusqu'à obtention d'un récipient intermédiaire ayant une plus grande dimension que le récipient final,
- rétrécissement du récipient intermédiaire basé sur l'action de la chaleur,
- et une extrusion-soufflage du récipient rétréci jusqu'à sa dimension finale, ce qui permet au récipient d'être lavé sans rétrécissement notable à une température élevée.

9. Procédé pour fabriquer un récipient selon la revendication 2, ledit procédé comprenant les opérations consistant en :
(a) un moulage par injection d'une préforme consistant principalement en PET avec un additif dans la partie de formation de paroi de récipient de la préforme, lequel additif retient ou fixe l'aldéhyde acétique (AA) contenu dans le PET ;
(b) une introduction de la préforme moulée par injection dans un moule et un chauffage du moule ;
(c) une extrusion-soufflage du récipient dans un procédé de thermofixage, par
- extrusion-soufflage de la préforme sous une pression maintenue jusqu'à une dimension finale du récipient dans le moule chaud ;
- maintien de la paroi du récipient soufflé pendant une durée prolongée en contact avec la surface interne du moule chaud, ce qui rend la paroi stable à la chaleur et permet au récipient final d'être lavé sans rétrécissement notable à une température élevée.
